# EUROPEAN PATENT SPECIFICATION

(11) **EP 1 051 922 B1**
(45) Date of publication and mention of the grant of the patent: **12.03.2003**
(21) Application number: 00201059.3
(22) Date of filing: 23.03.2000
(51) Int. Cl.: A23P 1/14, A23L 1/18, A21C 11/16

(54) **Extrusion die, extruded cereal and method for manufacturing the extruded cereal**
Extrusionsdüse, extrudiertes Getreideprodukt und Methode zur Herstellung des extrudierten Getreideproduktes
Filière d'extrusion, céréales extrudées et méthode pour la production de la céréale extrudées

(30) Priority: 30.04.1999 EP 99201367
(43) Date of publication of application: 15.11.2000
(60) Divisional application: 02018474.3
(73) Proprietor: SOCIETE DES PRODUITS NESTLE S.A., 1800 Vevey (CH)
(72) Inventor: Deutsch, Roman, 1095 Lutry (CH); Heck, Ernst, 1302 Vufflens-la-Ville (CH); Martin, Jean-Pierre, 1423 Villars-Burquin (CH)
(74) Representative: Wavre, Claude-Alain

(56) References cited:
- EP-A- 0 898 890
- WO-A-98/49902
- FR-A- 2 572 013
- US-A- 2 858 218
- US-A- 3 139 342
- US-A- 3 476 567
- US-A- 4 290 989
- US-A- 4 814 196

## Description

The subject of the present invention is an extrusion die, an extruder comprising at least one such die, an expanded cereal which can be obtained by extrusion through such a die and a method for manufacturing such a cereal.

EP 0,898,890 (SOCIETE DES PRODUITS NESTLE S.A.) describes an extrusion die for producing, by extruding a single substance, a product which has the overall shape of a nucleus surrounded by a ring, the die comprising a feed orifice plate opening onto a distribution chamber communicating, on the one hand, with a central extrusion duct with the overall shape of a converging cone, via a circular central orifice plate for pre-expansion and/or for slowing, and communicating, on the other hand, with at least one coaxial tubular extrusion duct with the overall shape of a converging cone, via at least one annular orifice plate for pre-expansion and/or slowing, the coaxial central and tubular extrusion ducts having concentric central and annular respective outlet orifices.

US 2,858,218 (J.O. BENSON) describes a cereal in the form of flakes which has a relief comparable with the surface of a raspberry, and a method for obtaining such a cereal, in which method a mixture of cereal and water is cooked at atmospheric pressure, the cooked paste thus obtained is extruded, driving it with a piston through a die which has a number of holes so as to form parallel filaments of cooked paste, the filaments are combined into a bundle and compressed laterally in a tubular extension of the die so that they stick together, the cylinder thus obtained is dried and cut transversely into thin slices and the slices are then made to puff under the action of heat.

US 3,482,992 (J.O. BENSON) describes a cereal in the form of flakes made up of touching pieces, the lines where the pieces meet being coloured, and a method for obtaining such a cereal, in which method a mixture of cereal and water is cooked in a cooking device, the cooked paste is extruded through a die which has a number of circular outlet orifices, particularly six holes arranged in a circle around a central hole, and a colorant is injected through small intermediate holes, so as to form parallel strands of cooked paste which are coloured at their interface, the strands are combined into a bundle and compressed laterally in a tubular extension of the die so that they stick together, the diameter of the composite strand thus obtained is reduced by drawing it longitudinally, the composite strand is cut transversely into thin slices, the slices are dried and then made to swell under the action of heat.
WO 98/49902 (General Mills Inc.) describes in connection with its Fig. 11 a multiple coloured or flavoured extruded cereal product made by leading together two different dough streams to a centre zone and a periphery, the peripheral dough stream converging and being compressed against the central dough stream shortly before the led-together dough streams are extruded through a single die opening, and slicing the extruded merged mass. The product (Fig. 11) has for example the general shape of a flower with a central zone originating from the central dough stream and petals originating from the peripheral dough stream. Since there is only one die opening with a central zone, the different components of the product (central portion and petals) form one merged multicoloured mass.

US 3,139,342 (E.F.LISKEY) describes the production of animal food pellets by extruding a stream of plasticized material through a cylindrical orifice and cutting the material into short lengths equal approximately to the diameter of the orifice. The extruded material expands or puffs to form individual spherical pellets shown in Fig. 3 of US 3,139,342. These individual pellets can be collected into a 3-dimensional agglomerated mass or cluster as shown in Fig. 4 of US 3,139,342.

The object of the present invention is to propose an extrusion die which makes it possible to produce an expanded cereal with a particularly attractive three-dimensional shape, namely the overall shape of an array of touching balls.

To this end, the extrusion die according to the present invention comprises a feed ring opening onto a cylindrical distribution chamber communicating with an array of 2-30 parallel extrusion tubes provided in a front wall, a cylindrical distribution insert extending axially from the centre of the ring as far as a predetermined distance from the array of tubes, wherein the cross sections of the tubes have diameters, lengths or widths of between 1.0 and 4.0 mm, and wherein the distance between two tubes of the array is from 0.2-0.6 mm.

The extruder according to the present invention comprises an elongate barrel containing one or two processing screws, at least one such extrusion die, and chopping means.

The expanded cereal according to the present invention has the overall shape of an array of touching balls which can be obtained by extruding a thermoplastic mass through a die comprising 2-30 parallel, spaced-apart extrusion tubes, and, cutting the thermoplastic mass at outlet orifices of the extrusion tubes into a slice, which is thereby detached and forms the array of touching balls,
whereby the array of touching balls comprises 2-30 balls, has an overall thickness of 4-16 mm, and is curved on the side where the slice is cut and detached.

The present method of manufacturing an expanded cereal with the overall shape of an array of touching balls, according to the present invention consists in cooking-extruding-expanding a mixture comprising, in parts by weight, 60-90 parts of starchy material, up to 15 parts of sugar, up to 10 parts of oil and water added until the mixture has a water content of 15-25% by weight, in performing the extrusion through at least one die comprising an array of 2-30 parallel extrusion tubes, wherein the cross section of the tubes has diameters, lengths or widths of between 1.0 and 4.0 mm and the distance between the tubes is from 0.2 to 0.6 mm, so as to obtain a bundle of strands of expanded thermoplastic substance which stick together, and in cutting the bundle into slices at the outlet orifices of the extrusion tubes.

In this description, the expression "processing screw" is to be understood as meaning the extruder screw or screws rotated inside a bore or two secant bores made in the barrel and to which processing members such as flights helically wound about their axis, are attached. The configuration, pitch, depth and hand of such flights may be configured in various ways along the axis so as to define zones for various processing operations such as conveying, wetting, mixing, shearing, compressing and/or cooking, for example. Such screws may be made as a single piece or by assembling elements slipped in succession onto a spindle, for example.

The present extrusion die therefore comprises a feed ring opening onto a cylindrical distribution chamber communicating with an array of parallel extrusion tubes provided in a front wall, a cylindrical distribution insert extending axially from the centre of the ring as far as a predetermined distance from the array of tubes.

The feed ring may be produced in the form of two concentric annuli connected by radial bars or by juxtaposed tubular hoops, for example.

The distribution insert may have a first cylindrical upstream part and a second frustoconical downstream part, for example. It is intended to even out the rate of displacement of a stream of thermoplastic substance to be extruded across the entire width of an extrusion front that corresponds to the width or diameter of the array of parallel extrusion tubes.

The tubes of the array of tubes may have cross sections of varying shape, such as circular, oval and/or polygonal, particularly triangular, square, rectangular and/or trapezoidal, for example.

The tubes of one and the same array may therefore have cross sections of the same or different shapes and sizes.

The array comprises 2-30 tubes, that, when viewed in cross section, may be arranged in alignment along a number of axes or curves, or in no particular order but relatively close together, for example.

The cross section of the tubes have dimensions, particularly diameters, lengths or widths of between 1.0 and 4.0 mm, or in other words may have a surface area or aperture of 1-16 mm², for example.

The extruder according to the present invention therefore comprises an elongate barrel containing one or two processing screws, at least one extrusion die according to the present invention, and chopping means.

The chopping means may be produced in the form of a rotary cutter with a number of blades, particularly 2-4 blades, rotating against the outlet orifices of the tubes of the array, or in other words against the front wall of the die.

In one preferred embodiment of the extruder with several dies, particularly 2-30 dies, a downstream part of the barrel containing a downstream end of the processing screw or screws ends in a front plate secured to the barrel and in which there is a predistribution orifice opening, via a predistribution orifice plate, onto a bell-shaped predistribution chamber, communicating with the distribution chambers of the dies via the feed rings.

In an embodiment of the extruder such as this one with several dies, the number of dies that can be used can be adjusted according to the output of the extruder, particularly by barring one die in two or one die in three by closing off its feed ring with a cover fixed at its centre in place of the distribution insert, for example.

The expanded cereal according to the present invention which can be obtained by extrusion through the present die therefore has the overall shape of an array of touching balls.

The touching balls of the array may be of similar or different shapes, and may, in particular, be round and/or elongated, and may or may not be aligned along axes or in curves, for example.

The array may have a periphery of varying overall shape, particularly square, rectangular, circular or oval, modulated by the bumps formed by the balls located at the edges, for example.

It is possible to envisage different embodiments of the present cereal, such as breakfast cereals or crunchy pet food, for example.

In an embodiment as a breakfast cereal, the present cereal can be eaten as it is or coated, particularly with a chocolate coating, a sugar syrup, a fruit syrup, a honey syrup, or a coating containing vitamins and flavourings, for example.

The present method of manufacturing an expanded cereal with the overall shape of an array of touching balls consists in cooking-extruding-expanding, at a pressure of 40-180 bar at 105-180°C, a mixture comprising, in parts by weight, 60-90 parts of starchy material, up to 15 parts of sugar, up to 10 parts of oil and water added until the mixture has a water content of 15-25% by weight, in performing the extrusion through at least one die comprising an array of parallel extrusion tubes so as to obtain a bundle of strands of expanded thermoplastic substance which stick together, and in cutting the bundle into slices at the outlet orifices of the extrusion tubes.

The mixture may further contain up to 1.5 parts of calcium, in the form of calcium carbonate or calcium triphosphate, for example.

Vitamins, trace elements and sodium chloride, for example, may be added to the mixture.

Colorants, flavourings or even flavouring ingredients such as cocoa may, for example, be added to it. For example, up to 6 parts of cocoa may be added.

The starchy material may be a cereal flour, particularly wheat, barley, rice and/or cornflour, and/or a starch, particularly wheat, barley, rice, tapioca, potato and/or corn starch, for example.

The sugar may be sucrose, glucose or fructose, for example.

The oil, preferably added in the proportion of 4-10 parts, may be butter oil or a vegetable oil such as palm nut oil, for example.

Cooking-extrusion may be performed in a cooker-extruder with a length to diameter screw ratio of about 9-24, with the screws rotating at 240-370 rpm, at a pressure chosen from the range from 40-180 bar and at a temperature chosen from the range of 105-180°C so as to obtain an expansion coefficient of about 2-4, for example, for the extruded strands.

Water escapes from the thermoplastic mass in the form of steam during expansion so that the extruded strands have a porous texture and may have a residual water content of 5-12%, for example.

The expanded cereal thus obtained may then be dried, particularly by passing it continuously through a hot air oven, until the residual water content is down to 1-3%, for example.

The die, the extruder and the cereal according to the present invention are described hereinafter with reference to the appended drawing given by way of example, and in which:
Figure 1 is a view in axial section of one embodiment of the die,
Figure 2 is a view in cross section of a detail of the die depicted in Figure 1,
Figure 3 is a partial cross section view of one embodiment of an extruder comprising a number of dies,
Figure 4 is a face view of the extruder depicted in Figure 3, and
Figure 5 is a photograph showing one embodiment of the cereal from three different angles.

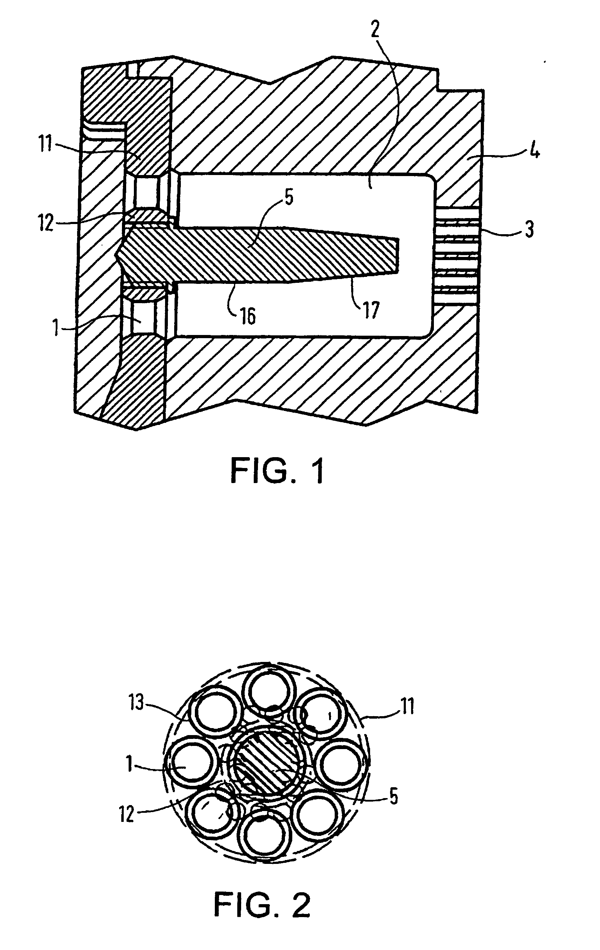

In the embodiment depicted in Figure 1, the extrusion die comprises a feed ring 1 opening onto a cylindrical distribution chamber 2 communicating with an array of parallel extrusion tubes 3 provided in a front wall 4, a cylindrical distribution insert 5 extending axially from the centre of the ring 1 as far as a predetermined distance from the array of tubes 3.

As can be seen depicted in Figures 1 and 2, the distribution ring 1 is produced in the form of two annuli 11 and 12 connected by juxtaposed tubular hoops 13.

The distribution insert 5 has a first cylindrical upstream part 16 and a second frustoconical downstream part 17.

The array of tubes 3 comprises 24 cylindrical parallel tubes of the same circular cross section arranged in two groups with parallel axes intersecting at angles.

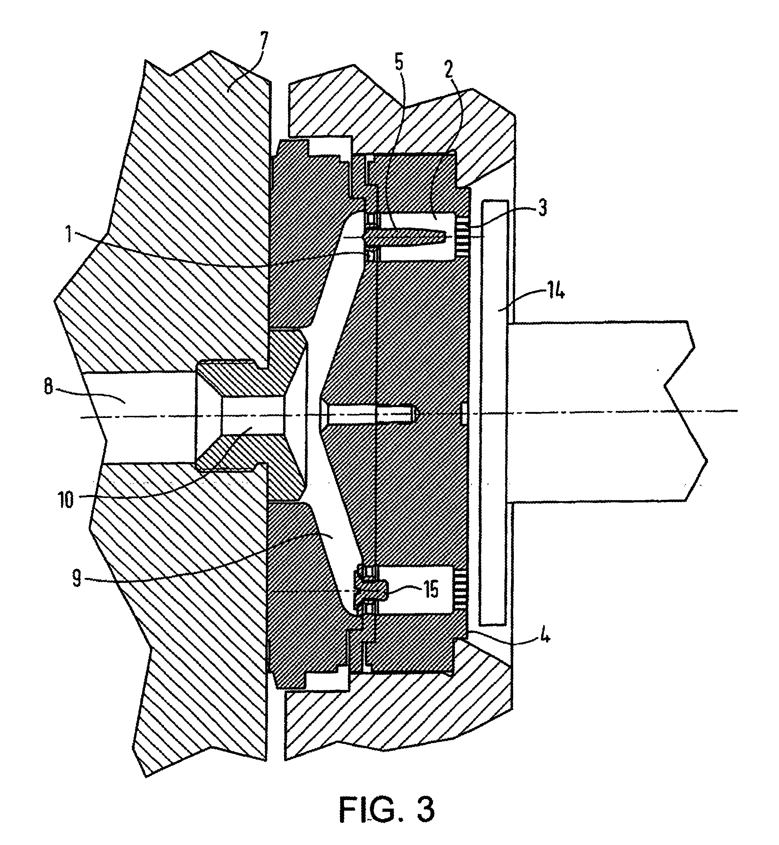

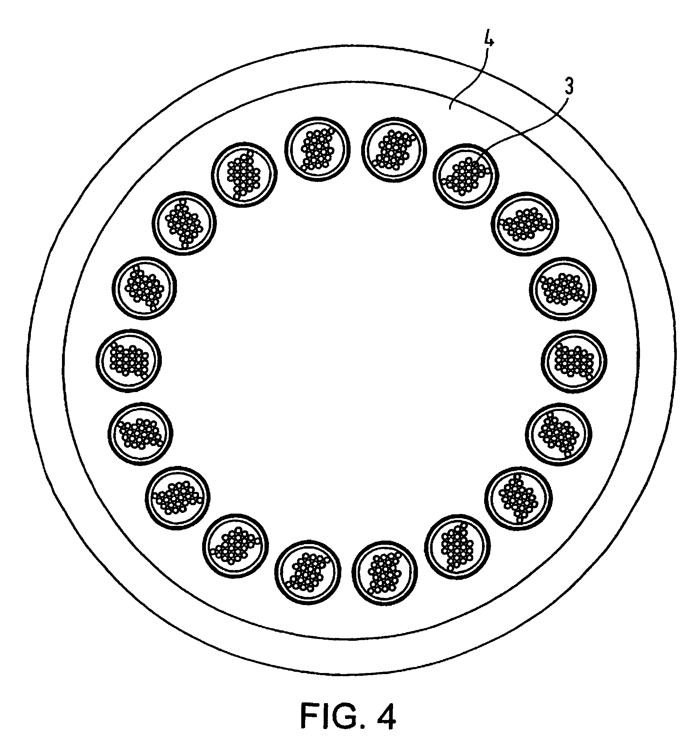

In the embodiment depicted in Figures 3 and 4, the extruder comprises an elongate barrel (not depicted) containing one or two processing screws (not depicted), a number of extrusion dies as depicted in Figures 1 and 2, and chopping means 14.

A downstream part of the barrel containing a downstream end of the processing screw or screws ends in a front plate 7 secured to the barrel and in which is provided a predistribution orifice 8 opening, via a predistribution orifice plate 10 onto a bell-shaped predistribution chamber 9 communicating with the distribution chambers 2 of the dies via the feed rings 1.

The chopping means are produced in the form of a rotary cutter 14 rotating against the outlet orifices of the tubes 3.

As can be seen in Figure 3, one die in two is barred, its feed ring being blanked off with a cover 15 fixed at its centre in place of the distribution insert 5, for example.

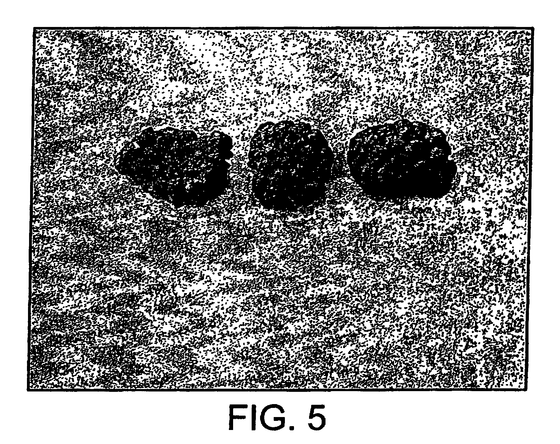

Figure 5 depicts one embodiment of the cereal which can be obtained by extrusion through a die similar to those depicted in Figures 1 and 4.

In this embodiment, the cereal therefore has the overall shape of an array of touching balls of the same round shape and of the same dimensions aligned in two groups with parallel axes intersecting at angles. The array of balls is slightly curved (on the side where the cutter detached the cereal from the composite strand leaving the die) and has a periphery of rectangular overall shape. See the left embodiment of Fig. 5.

The example hereinafter illustrates the production of a preferred form of the present cereal, in this instance an expanded breakfast cereal, by cooking-extruding a mixture based on flour and water in a cooker-extruder comprising several dies according to the present invention. In this example, just as in the entirety of this description, the percentages and parts are given by weight.

### Example

A twin-screw cooker-extruder comprising several dies like the one illustrated in Figures 3 and 4 is used to produce expanded cereals with the shape of an array of touching round balls as illustrated in Figure 5.

To do this, a mixture with the following composition (in parts, except for the added water):

| | |
|---|---|
| Rice flour | 40 |
| Cornflour | 12 |
| Wheat flour | 22 |
| Sucrose | 10 |
| Palm nut oil | 5 |
| Salt/spices | 3 |
| Water added to a water content of 18% | |

was prepared.

To prepare the mixture, the dry powders were first mixed. The dry mixture, the oil and the water added to the extruder, in this instance a CLEXTRAL type BC-72 twin-screw extruder with a screw diameter of 88 mm and screw length of 900 mm were then mixed.

The mixture was then cooked-extruded at 170°C at 100-120 bar, with the extruder screws rotating at 310 rpm.

The thermoplastic mass thus obtained was extruded through 6 arrays of 24 tubes, the tubes having a diameter of 1.3 mm and the distance between two tubes being 0.3 mm.

The thermoplastic mass was extruded into the ambient space and immediately cut into slices using a four-bladed cutter rotating at 800 rpm against the front wall of the dies.

The cereal obtained had the overall shape of an array of 24 touching balls with the same round shape and the same dimensions aligned in two groups with parallel axes intersecting at angles. The array of balls was slightly curved (on the side where the cutter detached the cereal from the composite strand leaving the die) and had a periphery of rectangular overall shape.

The cereal had a thickness of about 6 mm, a width of about 15 mm and a length of about 20 mm.

## Claims

1. Extrusion die comprising a feed ring (1) opening onto a cylindrical distribution chamber (2) communicating with an array of 2 - 30 parallel extrusion tubes (3) provided in a front wall (4), a cylindrical distribution insert (5) extending axially from the centre of the ring (1) as far as a predetermined distance from the array of tubes (3), wherein the cross sections of the tubes have diameters, lengths or widths of between 1.0 and 4.0 mm, and wherein the distance between two tubes of the array is from 0.2-0.6 mm.

2. Extruder comprising an elongate barrel containing one or two processing screws, at least one extrusion die according to Claim 1, and chopping means.

3. Extruder according to Claim 2, comprising several dies, a downstream part of the barrel containing a downstream end of the processing screw or screws ending in a front plate (7) secured to the barrel and in which there is a predistribution orifice (8) opening, via a predistribution orifice plate (10), onto a bell-shaped predistribution chamber (9), communicating with the distribution chambers (2) of the dies via the feed rings (1), the chopping means being produced in the form of a rotary cutter (14) rotating against the outlet orifices of the tubes (3).

4. Expanded cereal, that has the overall shape of an array of touching balls,
which can be obtained by extruding a thermoplastic mass through a die comprising 2-30 parallel, spaced-apart extrusion tubes, and,
cutting the thermoplastic mass at outlet orifices of the extrusion tubes into a slice, which is thereby detached and forms the array of touching balls,
whereby the array of touching balls comprises 2-30 balls, has an overall thickness of 4-16 mm, and is curved on the side where the slice is cut and detached.

5. Method of manufacturing an expanded cereal with the overall shape of an array of touching balls, consisting in cooking-extruding-expanding a mixture comprising, in parts by weight, 60-90 parts of starchy material, up to 15 parts of sugar, up to 10 parts of oil and water added until the mixture has a water content of 15-25% by weight, in performing the extrusion through at least one die comprising an array of 2-30 parallel extrusion tubes, wherein the cross section of the tubes has diameters, lengths or widths of between 1.0 and 4.0 mm and the distance between two tubes is from 0.2 to 0.6 mm, so as to obtain a bundle of strands of expanded thermoplastic substance which stick together, and in cutting the bundle into slices at the outlet orifices of the extrusion tubes.

6. Method according to Claim 5, in which a coefficient of expansion of 2-4 is obtained for the extruded strands.

7. Method according to Claim 5, in which the extruded strands have a porous texture.

8. Method according to Claim 5, in which the extruded strands have a residual water content of 5-12%.

## Patentansprüche

1. Extrusions-Formdüse mit einem Speisering (1), der sich zu einer zylindrischen Verteilungskammer (2) öffnet, die mit einer Gruppierung von 2-30 parallelen Extrusionsröhrchen (3) kommuniziert, die in einer Stirnwand (4) vorgesehen ist, wobei sich ein zylindrischer Verteilungseinsatz (5) in axialer Richtung vom Zentrum des Rings (1) bis zu einem vorgegebenen Abstand von der Gruppierung der Röhrchen (3) erstreckt, wobei die Querschnitte der Extrusionsröhrchen Durchmesser, Längen oder Breiten zwischen 1,0 und 4,0 mm aufweisen, und wobei der Abstand zwischen zwei Röhrchen von 0,2-0,6 mm beträgt.

2. Extruder mit einem langgestreckten Gehäuse, das eine oder zwei Arbeitsschnecken, wenigstens eine Extrusionsformdüse nach Anspruch 1 sowie eine Schneideinrichtung enthält.

3. Extruder nach Anspruch 2, aufweisend mehrere Formdüsen, wobei ein stromab gelegener Teil des Gehäuses ein stromab gelegenes Ende der Arbeitsschnecke oder -schnecken enthält, das in einer Abschlußplatte (7) endet, die an dem Gehäuse befestigt ist und in der eine Vorverteilungsöffnung (8) vorgesehen ist, die sich durch eine Platte mit einer Vorverteilungs-Öffnung (10) zu einer glockenförmigen Vorverteilungskammer (9) öffnet, die über die Speiseringe (1) mit den Verteilungskammern (2) der Formdüsen kommuniziert, wobei die Schneideinrichtung in Form eines rotierenden Schneidmessers (14) ausgeführt ist, das gegen die Austrittsöffnungen der Röhrchen (3) rotiert.

4. Expandierte Cerealie, die die Grundform einer Gruppierung von sich berührenden Kugeln aufweist,
die erhältlich ist durch Extrudieren einer thermoplastischen Masse durch eine Formdüse, die 2-30 parallele, voneinander beabstandete Extrusionsröhrchen aufweist, und Schneiden der thermoplastischen Masse an den Austrittsöffnungen der Extrusionsröhrchen zu einer Scheibe, die dadurch abgetrennt wird und die Gruppierung von sich berührenden Kugeln bildet,
wodurch die Gruppierung von sich berührenden Kugeln 2-30 Kugeln aufweist, eine Gesamtdicke von 4-16 mm hat und auf der Seite gekrümmt ist, auf der die Scheibe geschnitten und abgetrennt ist.

5. Verfahren zur Herstellung einer expandierten Cerealie mit der Grundform einer Gruppierung von sich berührenden Kugeln, das im Kochen-Extrudieren-Expandieren einer Mischung, die, in Gewichtsteilen, 60 bis 90 Teile stärkehaltiges Material, bis zu 15 Teile Zucker, bis zu 10 Teile Öl sowie Wasser enthält, das zugesetzt wird, so dass die Mischung einen Wassergehalt von 15 bis 25 Gew.-% aufweist, der Durchführung einer Extrusion durch wenigstens eine Formdüse, die eine Gruppierung von 2-30 parallelen Extrusionsröhrchen umfaßt, wobei die Querschnitte der Extrusionsröhrchen Durchmesser, Längen oder Breiten zwischen 1,0 und 4,0 mm aufweisen und der Abstand zwischen zwei Röhrchen von 0,2 bis 0,6 mm beträgt, so daß ein Bündel von Strängen einer expandierten thermoplastischen Substanz erhalten wird, die aneinander haften, und im Schneiden des Bündels in Scheiben an den Austrittsöffnungen der Extrusionsröhrchen besteht.

6. Verfahren nach Anspruch 5, bei dem für die extrudierten Stränge ein Expansionskoeffizient von 2-4 erhalten wird.

7. Verfahren nach Anspruch 5, bei dem die extrudierten Stränge eine poröse Textur aufweisen.

8. Verfahren nach Anspruch 5, bei dem die extrudierten Stränge einen Restwassergehalt von 5-12% aufweisen.

## Revendications

1. Filière d'extrusion comportant un anneau (1) d'alimentation s'ouvrant sur une chambre cylindrique (2) de distribution communiquant avec un groupement de 2 à 30 tubes parallèles (3) d'extrusion situés dans une paroi avant (4), une pièce rapportée cylindrique (5) de distribution s'étendant axialement depuis le centre de l'anneau (1) jusqu'à une distance prédéterminée du groupement de tubes (3), dans laquelle les sections transversales des tubes ont des diamètres, des longueurs ou des largeurs comprises entre 1,0 et 4,0 mm, et dans laquelle la distance entre deux tubes du groupement est de 0,2 à 0,6 mm.

2. Extrudeuse comportant un corps cylindrique allongé contenant une ou deux vis de traitement, au moins une filière d'extrusion selon la revendication 1, et des moyens de hachage.

3. Extrudeuse selon la revendication 2, comportant plusieurs filières, une partie d'aval du corps cylindrique contenant une extrémité d'aval de la vis ou des vis de traitement se terminant dans une plaque frontale (7) fixée au corps cylindrique et dans laquelle il y a un orifice (8) de pré-distribution s'ouvrant, par l'intermédiaire d'une plaque (10) à orifice de pré-distribution, sur une chambre (9) de pré-distribution en forme de cloche, communiquant avec les chambres (2) de distribution des filières par l'intermédiaire des anneaux (1) d'alimentation, les moyens de hachage étant produits sous la forme d'un couteau rotatif (14) tournant contre les orifices de sortie des tubes (3).

4. Céréale soufflée, qui a la forme générale d'un groupement de boules se touchant,
qui peut être obtenue en extrudant une masse thermoplastique à travers une filière comportant deux à trente tubes d'extrusion parallèles et espacés,
en coupant la masse thermoplastique aux orifices de sortie des tubes d'extrusion en une tranche, laquelle est ainsi détachée et forme le groupement de boules se touchant,
grâce à quoi le groupement de boules se touchant comprend deux à trente boules, à une épaisseur globale de 4 à 16 mm et est courbé sur le côté où la tranche est coupée et détachée.

5. Procédé de production d'une céréale soufflée ayant la forme générale d'un groupement de boules se touchant, consistant à cuire-extruder-souffler un mélange comprenant, en parties en poids, 60 à 90 parties d'une matière amidonnée, jusqu'à 15 parties de sucre, jusqu'à 10 parties d'huile et de l'eau ajoutée jusqu'à ce que le mélange ait une teneur en eau de 15 à 25% en poids, à effectuer l'extrusion à travers au moins une filière comportant un groupement de deux à trente tubes parallèles d'extrusion, dans lequel la section transversale des tubes a des diamètres, des longueurs ou des largeurs comprises entre 1,0 et 4,0 mm et la distance entre deux tubes est de 0,2 à 0,6 mm, afin d'obtenir un faisceau de fils d'une substance thermoplastique soufflée qui adhèrent entre eux, et à couper le faisceau en tranches aux orifices de sortie des tubes d'extrusion.

6. Procédé selon la revendication 5, dans lequel un coefficient de dilatation de 2 à 4 est obtenu pour les fils extrudés.

7. Procédé selon la revendication 5, dans lequel les fils extrudés ont une texture poreuse.

8. Procédé selon la revendication 5, dans lequel les fils extrudés ont une teneur en eau résiduelle de 5 à 12%.
